# EUROPÄISCHE PATENTSCHRIFT

(11) **EP 4 063 566 B1**
(45) Veröffentlichungstag und Bekanntmachung des Hinweises auf die Patenterteilung: **04.10.2023**
(21) Anmeldenummer: 22160251.9
(22) Anmeldetag: 04.03.2022
(51) Int. Cl.: E02D 3/12, C09K 17/00, C09K 17/16

(54) **VERFAHREN ZUR VERBESSERUNG DER THERMISCHEN LEITFÄHIGKEIT VON BÖDEN**
METHOD FOR IMPROVING THE THERMAL CONDUCTIVITY OF SOILS
PROCÉDÉ D'AMÉLIORATION DE LA CONDUCTITVITÉ THERMIQUE DES SOLS

(30) Priorität: 07.03.2021 DE 102021105444
(43) Veröffentlichungstag der Anmeldung: 28.09.2022
(73) Patentinhaber: Christian-Albrechts-Universität zu Kiel, 24118 Kiel (DE)
(72) Erfinder: Wuttke, Frank, 23235 Laboe (DE); Zarghaam, Haider Rizvi, 24159 Kiel (DE)

(56) Entgegenhaltungen:
- EP-A1- 3 050 860
- DE-A1-102011 108 821
- NL-A- 7 211 474

## Beschreibung

Die Erfindung betrifft ein Verfahren zur Verbesserung der thermischen Leitfähigkeit von Böden um und/oder im Bereich um eine eingeerdete Hochspannungsleitung und/oder Höchstspannungsleitung.

Bei eingeerdeten Hoch- und Höchstspannungskabeln ist eine signifikanter Wärmefluss ausgehend von dem Kabel vorhanden. Dieser Wärmefluss muss möglichst schnell in das umgebende Erdreich weggeführt werden können, um einen starken Temperaturanstieg am und um das Kabel zu verhindern und Schäden bzw. eine starke Verringerung der zu transportierenden elektrischen Energie durch den Anstieg des elektrischen Widerstands zu vermeiden.

Technisch können derzeit während der Planungsphase verschiedene technische Maßnahmen, wie thermisch optimierte Bettungsmaterialien oder unmittelbare technische Einbauten, genutzt werden, um diesem Fall vorzubeugen. Allerdings bedingen technische Einbauten eine permanente Betriebswartung und Bettungsmaterialien sind deutlich kostenaufwändiger in der Planung und Erstellung dieser Energietrassen.

Allen derzeit verfügbaren Maßnahmen gemein ist der Einbau vor der Inbetriebnahme. Nachträgliche Verbesserungen sind nicht oder nur mit sehr großem Aufwand und der temporären Stilllegung der Trasse möglich.

Bei einem Großteil der eingeerdeten Kabel wurde daher oftmals keine Verbesserungsmaßnahme geplant und auch bei in der Planung befindlichen Trassen, werden oft nur bei Höchstspannungskabeln derartige Maßnahmen in Erwägung gezogen. Dementsprechend weit verbreitet ist eine bewusste Geringauslastung der Trassen um unerwünschte Erwärmungen vorzubeugen.

Eine thermische Bodenverbesserung ist derzeit nur als bauliche Maßnahme, also eine vorab zu planende Maßnahme von einem geeigneten Bettungsmaterial im Kabelraum bekannt. Dieses Bettungsmaterial soll neben der schnellen Ableitung des thermischen Energieeintrages, eine mechanische und hydraulische Sicherung als auch eine entsprechende thermische Stabilität aufweisen.

Als eine erste Gruppe von Materialien stehen thermische verbesserte Betone von unterschiedlichen Zementherstellern zur Verfügung. Diese Betone sind durch spezielle Additive, wie Graphitzusätze u.a. für eine höhere Wärmeleitfähigkeit im Bereich von 3 bis 6W/mK entwickelt. Der Nachteil dieser Materialien ist neben dem hohen Preis, das Abbinden und Versiegeln von Untergrundfläche, wodurch ein Einsatz über eine größer Längsausdehnung entfällt.

Neben den thermisch verbesserten Betonen existiert für die Verfüllung eines Luftspaltes zwischen Schutzrohren und dem Kabel ein spezielles thermisch verbessertes Gel. Dieses Gel wurde für das Verpressen des Luftspaltes bei Unterquerungen entwickelt. Entlang einer horizontalen Kabeltrasse wird das Kabel in der Regel mit einem Luftspalt verlegt.

Weiterhin existieren auf dem Markt unterschiedliche thermisch verbesserte Flüssigböden. Diese Flüssigböden werden durch das Versetzen von anstehenden Böden mit unterschiedlichen fließfähigen Additiven und weiteren Bindemitteln, wie Plastifikatoren - Schichtmineralien, Bentonite -, Stabilisatoren, Beschleunigern erzeugt. Die thermische Verbesserung erfolgt durch die Zugabe von Graphit, Metallspänen, Asche, Kohle, Siliziumkarbid oder auch durch superabsorbierende Polymere, Methylcellulosen oder Cellulosen und anderen feuchtigkeitsbindenden Zusätzen.

Eine weitere Möglichkeit ist der Einsatz von speziell abgestuften natürlichen Mineralgemischen. Dabei wird ein Sieblinien-optimiertes Bettungsmaterial genutzt, bei welchem speziell abgestufte granulare Sand-Feinkorn-Mischungen zum Einsatz kommen. Die Materialien werden dabei nahe einer Fullerkurve abgestuft, wodurch eine optimale Verdichtungsfähigkeit und damit gute Voraussetzungen für eine hohe Wärmeleitfähigkeit vorhanden sind. In Versuchen wurden dabei Wärmeleitfähigkeiten im trockenen Zustand von > 0.9 W/mK und eine Zunahme im gesättigten Zustand bis 2,7 W/mK erreicht.

Die Druckschrift DE 10 2011 108 821 A1 umfasst ein Verfahren zur Verbesserung von mehrkomponentigen Funktionsmaterialien mit einem Transportprozess als wesentlicher Funktion. Durch den Einsatz von Verdrängungskörpern wird der für die Funktionsteilchen, welche für den Transportprozess verantwortlich sind, zur Verfügung stehende Raum reduziert. Durch die Verdrängungskörper kann ein enger Kontakt zwischen den Transportteilchen erzwungen werden, ihre Form optimal ausgerichtet werden, sowie bei vorhandener Anisotropie eine optimale Ausrichtung erreicht werden. Somit wird durch Überschreiten der Perkolationsschwelle bereits bei sehr geringer Dichte an Transportteilchen ein entscheidender Sprung des geforderten Transportphänomens beobachtet. Insbesondere wird ein Verbundmaterial für Erdstromkabel und Umhüllungen von elektrischen Bauteilen zur Verfügung gestellt, bei dem Graphit als Bestandteil des Kabelmantels oder des Umhüllungs- bzw. Gehäusematerials des elektrischen Bauteils als Funktionskomponente zur Erhöhung der Wärmeleitfähigkeit und somit zur Erhöhung der Übertragung von Wärmeleistung eingesetzt wird. Als Material für die Verdrängungskörper eignen sich beispielsweise anorganische Materialien wie Glas, recycliertes Altglas, Mineralien, Perlite, Kunststoffe oder Quarzsand. Diese können sowohl porös als auch nicht porös sein. Die Teilchen Größe der Verdrängungskörper kann an die mechanischen Anforderungen des Verfüllmaterials angepasst werden und im Bereich von etwa 0,005 mm bis 1,5 mm liegen.

In der Druckschrift US20190074671 A1 wird ein Verfahren zum Ersetzen von rohrförmigen Stromkabeln offenbart. Das Verfahren umfasst die folgenden Schritte: Verwendung einer Rohrschneidestange zum Bersten eines vorhandenen Rohrs; Verwendung eines um das vorhandene Rohr zu erweitern, um einen Weg für eine neue Leitung oder ein neues Rohr zu schaffen; Ziehen der neuen Leitung oder des neuen Rohrs in den durch den Expander geschaffenen Weg Rohr in den durch den Expander geschaffenen Weg; und Einziehen neuer Kabel in die Leitung oder das Rohr.

Die Druckschrift DE 199 58 765 A1 wiederum offenbart ein Verfüllmaterial für Erdreichwärmeübertrager (beispielsweise Erdwärmesonden) und Erdstarkstromkabel. Durch den Einsatz von Graphit als Bestandteil des Verfüllmaterials wird dessen Wärmeleitfähigkeit erhöht und somit die Fähigkeit des Erdreichwärmeübertragers verbessert, große Wärmeleistungen zu übertragen. Erdstarkstromkabel können bei hoher Belastung (hohe Stromstärken) die dabei entstehende Wärme besser ans umgebende Erdreich abgeben.

Aus der Druckschrift EP 3 050 860 A1 ist ein Erdleitungs-Bettungsmaterial, welches der Einbettung mindestens einer Erdleitung, insbesondere eines Erdkabels, dient, bekannt. Erfindungsgemäß ist das Erdleitungs-Bettungsmaterial mit einem zeitweise fließfähigen selbstverdichtenden Verfüllbaustoff gebildet. Der Verfüllbaustoff weist einen Baustoff, ein Baustoffgemisch oder ein Bodenmaterial, einen Zusatz zur Steuerung der Konsistenz und/oder der Stabilisierung des Abbindeverhaltens, mindestens ein Bindemittel und Wasser auf. Der Verfüllbaustoff weist eine thermische Leitfähigkeit von mindestens 1 bis 2 W/(mK) bei 5 Massenprozent Feuchte und 2 bis 3 W/(mK) bei 15 Massenprozent Feuchte auf. In ungebundenem Zustand ist der Verfüllbaustoff fließfähig, selbstverdichtend und mischungsstabil. In abgebundenem Zustand weist der Verfüllbaustoff eine Wiederaushubfähigkeit auf. Darüber hinaus ist der Verfüllbaustoff in abgebundenem Zustand volumenstabil. Schließlich ist der Verfüllbaustoff bereits nach 48 Stunden (oder sogar früher) begehbar.

Die Druckschrift US20190210924 A1 offenbart eine im Wesentlichen sandfreie, bentonitische Flüssigkeit auf wässriger Basis, die Graphitflocken enthält. Diese Flüssigkeit kann dazu beitragen, die Wärme aus dem Betrieb von unterirdisch verlegten elektrischen Leitungen abzuführen. Die Flüssigkeit wird beim Bohren eines Bohrlochs, z. B. beim grabenlosen Bohren, oder bei der Herstellung eines Grabens verwendet, der die Leitungen aufnimmt und enthält. Die Flüssigkeit kann auch direkt auf die Außenseite und/oder die Innenseite von Rohren aufgebracht werden, die elektrische Leitungen enthalten. Wärmeleitfähigkeiten mit Werten von etwa 1,6 bis etwa 1,8 BTU/Std ft° F oder höher können erreicht werden.

Aus der Druckschrift NL 7 211 474 A ist eine Wärmeisoliervorrichtung für ein Rohr mit sehr niedriger Temperatur, die ein thermisches Abschirmungsgitter in Form eines Metallzylinders umfasst, der dieses Rohr umgibt, wobei das Abschirmungsgitter aus mindestens zwei Teilen besteht, die entlang zweier Beschreibungslinien des geformten Zylinders miteinander verbunden sind, ein abgedichtetes, metallisches, ölindustrielles Außengehäuse, das das Siebgitter umgibt, ein wärmeisolierendes Pulver, das den Raum zwischen dem Siebgitter und dem Außengehäuse ausfüllt, Bauteile zur Aufhängung des Rohrs in dem Siebgitter und Bauteile zur Aufhängung des Siebgitters in dem Außengehäuse, mindestens ein Zwischenstück, das entlang jeder der beschriebenen Linien angebracht ist, um die Teile des Gitterrostes mechanisch zu verbinden und thermisch voneinander zu isolieren, wobei die beiden Teile des Gitterrostes mindestens ein Kohlenrohr in gutem thermischen Kontakt tragen, und Mittel vorgesehen sind, um ein Kühlmedium in einer Hinrichtung durch das Kühlrohr, das von einem dieser Abschnitte getragen wird, und in einer Rückrichtung durch das Kühlrohr, das von dem anderen Abschnitt getragen wird, zirkulieren zu lassen, wobei die Abschirmgitterabschnitte aus einer Legierung mit einem Wärmeschrumpfungskoeffizienten von weniger als 5*10-4 gebildet sind, bekannt.

Zu dem Stand der Technik sei an dieser Stelle auch auf die zwei Druckschriften US 2019/210 924 A1 sowie ISSN: 2445-3956, Volume-4, Issue-3, Parmer et al., März 2017, "Bio Cementation: A Novel Technique and Approach Towards sustainable Material" verwiesen, aus denen eine Biozementierung bekannt ist.

Das Ziel der Erfindung ist eine nachträgliche Verbesserung der abstehenden Bodenbereiche um ein Kabel durch minimale Eingriffe mittels einer Injektion ohne weiteren Bodenaushub und dadurch die Aufrechterhaltung des Kabelbetriebs bzw. Minimierung von Kosten in der Bodenverbesserung.

Die Resultate sind nicht nur ein Schutz der eingeerdeten Kabel vor Überhitzung, sondern auch die Erhöhung der zu transportierenden elektrischen Energiemenge durch das Kabel.

Die Erfindung hat die Aufgabe die thermischen Bodeneigenschaften um ein Kabel so zu verbessern, dass die Funktionsfähigkeit erhalten bleibt bzw. wiederhergestellt oder sogar weiter verbessert wird.

Die vorliegende Erfindung löst die oben genannten technischen Probleme, indem sie ein Verfahren gemäß Hauptanspruch vorstellt.

Das erfindungsgemäße Verfahren zur Verbesserung der thermischen Leitfähigkeit von Böden um und/oder im Bereich um eine eingeerdete Hochspannungsleitung und/oder Höchstspannungsleitung, ist dadurch gekennzeichnet, dass eine Kornkontaktverbesserung und eine Erhöhung der Materialdichte des die eingeerdete Hochspannungsleitung und/oder Höchstspannungsleitung umgebende Erdreich durch
- Injektion einer Suspension zur Anregung einer Biozementierung mit zu injizierenden biozementierenden Mikroorganismen und einer Nährlösung in das Erdreich und
- nachfolgende Biozementierung des umgebenden Erdreichs
   erfolgt.

In einer Ausführungsvariante kann die Suspension zur Anregung der Biozementierung zusätzlich zerkleinerte Feinbestandteile von Felsmineralien und/oder Gesteinsmehl mit einem hohen Anteil von Quarz aufweisen.Weiter kann in einer Ausführungsvariante zusätzlich zu der Injektion einer Suspension zur Anregung einer Biozementierung eine insbesondere eine Injektion einer Suspension von Urea und Calzium erfolgen.

Insbesondere kann die Injektion punktuell oder flächig oder abschnittsweise flächig oder punktuell erfolgen.

Für die Verbesserung der thermischen Leitfähigkeit von natürlichen Böden, können bislang keine umweltverträglichen Methoden genutzt werden. Für die nachträgliche Verbesserung der thermischen Leitfähigkeit des Bodens um eingeerdete Höchstspannungskabel wird eine Injektion zur Anregung der Biozementierung vorhandener oder zu injizierender Mikroorganismen genutzt. Zusätzlich kann eine Injektion einer Schlämme aus zerkleinerten Feinbestandteilen von Felsmineralien genutzt werden.

Die Methode dient der Kornkontaktverbesserung und Erhöhung der Materialdichte durch gut leitfähige Mineralien. Der Vorteil dieser Methode ist der weitestgehend zerstörungsfreie und umweltverträglich Einsatz auch im Nachgang zu der Baumaßnahme als punktuelle oder flächige Sanierung bzw. Verbesserung.

Insbesondere kann die Verbesserung unmittelbar und/oder zeitlich versetzt und/oder mehrfach zeitlich versetzt bzw. bei Bedarf wiederholend nach Einbringung der eingeerdeten Leitungen erfolgen.

Das hier vorgestellte Verfahren zur Verbesserung der thermischen Leitfähigkeit des Bodens rund um ein Hoch- oder Höchstspannungskabel, allgemein ein Kabel oder auch elektrische Leitung im Erdboden, das einer hohen Belastung durch Stromleitung unterworfen ist, ermöglicht die bessere Wärmeabfuhr. Insbesondere kann dieses Verfahren das gesamte Einbringverfahren einer Höchstspannungsleitung im Erdboden erheblich vereinfachen, da die Verbesserung des das Kabel umgebenden Erdreichs zeitlich versetzt zur tatsächlichen Verlegung erfolgen kann. Zudem kann das Verfahren bei punktuellen Leistungsabfällen auch erneut ausgeführt werden, so dass die maximale Leitfähigkeit erhalten bleiben kann. Ein Einsatz bei älteren bereits gelegten Kabeln ist ebenso problemlos möglich.

Ein besonderer Vorteil der hier vorgestellten und beschriebenen Methodik ist die nachträgliche, umweltverträgliche Verbesserung der thermischen Bodenparameter in einem Gebiet um eingeerdete Kabel, auch als Sanierungsmaßnahme, wenn die vorhandene Leitfähigkeit im Boden nicht ausreichend ist oder verlorengegangen ist.

Die Injektion bzw. Injektionen können in den Bereich des die eingeerdete Hochspannungsleitung und/oder Höchstspannungsleitung umgebenden Erdreichs erfolgen. Die thermische Bodenverbesserung kann durch einfache Injektionsmaßnahmen erfolgen, so dass ein Bodenaushub nicht erforderlich ist und der Betrieb der elektrischen Kabelanlage weiterlaufen kann. Ein ansonst notwendiger Eingriff in die Bodenstruktur entfällt.

Weiter ist es zudem möglich, nachträgliche Bodenverbesserung an existierenden Anlagen durchzuführen und zwar nicht nur einmal, sondern bedarfsweise in Abständen wiederholend.

Dem gegenüber existieren derzeit nur Verfahren zur Verbesserung von thermischen Bodenparametern, welche vor oder während der Baumaßnahme angewendet werden können und einen Kostenaufwand verursachen.

Der Vorteil im Einsatz des offenbarten Verfahrens kann zudem darin gesehen werden, dass auch eine punktgenaue Anwendung bei thermischen Hotspots entlang des eingeerdeten Kabels möglich ist und so eine effektive Verbesserung der thermischen Bodenparameter auf einen gewünschten Wert und in einem geplanten Bereich erfolgen kann.

Das Ergebnis in dem schnellen Abführen der Wärmeenergie ist insbesondere der Schutz des Kabels und die Verringerung des elektrischen Widerstands in dem Kabel, wodurch letztendlich auch mehr elektrische Energie transportiert werden kann.

Der Umstand, dass das Verfahren bei bereits verlegten Trassen anwendbar und zudem umweltverträglicher und kostengünstiger als die derzeit genutzten Lösungen ist, dürfte den Energieerzeugern und Netzbetreibern, die dieses Verfahren nutzen erhebliche wirtschaftliche Vorteile bringen, da die bestehenden Kabeltrassen mit einer Länge von 3000-4000 km in den kommenden Jahren im Zuge des Ausbaus erneuerbarer Energie zudem auf eine Länge von ca. 20.000 km ausgebaut werden sollen. Zudem können mittels des hier offenbarten Verfahrens die Kabel bei höheren Temperaturen betrieben werden, wodurch die Kabelleitungen eine wesentlich höhere Strommenge leiten können.

Grundsätzlich kann das Verfahren überall dort eingesetzt, wo thermische Bodenparameter im Untergrund modifiziert werden müssen.

Weiterhin kann das Verfahren ebenso genutzt, um Steifigkeit und Festigkeiten im Boden durch die sich neu ausbildenden Kornkontakte zu erhöhen bzw. die hydraulischen Leitfähigkeiten im Untergrund durch die Verkleinerung des Porenraums zu verringern.

Die Erfindung unterscheidet sich zudem dahingehend von den bisherigen Möglichkeiten der thermischen Bodenverbesserung dadurch, dass die bisherigen Verfahren nur im Vorfeld oder während der Baumaßnahme eingebracht werden können. Das neue Verfahren kann insbesondere als nachgeführtes oder auch nachträgliches Verfahren genutzt werden, wenn Positionen entlang der Kabeltrasse bekannt wurden, bei denen thermische Probleme entstehen oder entstanden sind.

In den Kabeln entlang der Trasse kann die transportierte Energie oder auch die Temperatur durch Sensoren, insbesondere Glasfasersensoren im Kabel erfasst werden, wodurch relativ genau während des Kabelbetriebs die Position oder zumindest die Bereiche mit ungenügenden thermischen Randbedingungen um das Kabel erfasst und ausgewiesen werden können.

An der Position des Kabels bzw. der Kabelgrabenkonzeption muss für die hier beschriebene nachträgliche Bodenverbesserung nichts geändert werden und der Kabelbetrieb erfolgt ununterbrochen.

Es wird hier insbesondere in einem besonders bevorzugten beispielhaften Ausführungsbeispiel ein Verfahren aufgezeigt, das eine umweltverträgliche Substanz zur nachträglichen oder baubegleiteten Injektion in die Peripherie eingeerdeter Höchstspannungskabel bzw. elektrischer Leitungen im Erdreich umfasst, wobei eine Biozementierung mittels einer Injektion mit bioverträglichen und injizierfähigen Mikroorganismen erfolgt, wobei in der durchsetzten Substanz im Erdreich die Biozementierung des das Kabel umgebenden Bodens erfolgt und so dessen thermische Leitfähigkeit verbessert.

Bestehende aber auch neu hergestellte Kabeltrassen können so mit höherer Leistung betrieben werden, da die Wärme schneller in die Umgebung abgeleitet wird. Die damit verbundene weitläufigere Wärmeverteilung verhindert zudem das Auftreten von Hot Spots. Diese sind besonders an Leitungsknotenpunkten kritisch. Des Weiteren führen Hot Spots zu geringeren Ernteerträgen auf darüber liegenden Landwirtschaftsflächen, die so durch die verbesserte thermische Leitfähigkeit effektiv ausgeschlossen werden können.

Es erfolgt insbesondere eine gezielte Biozementierung der Bodenperipherie von eingeerdeten Höchstspannungskabel, so dass eine höhere thermische Leitfähigkeit erreicht wird, die die entstehende Wärme der Kabel wirksam ableiten kann.

Nachfolgend erfolgt die Beschreibung der Erfindung an einem nicht zwingend den Gedanken der Erfindung beschränkenden beispielhaften Ausführungsbeispiels:
Für die nachträgliche Bodenverbesserung kann ein Injektionsverfahren genutzt werden. Dazu wird mit einer dünnen Edelstahllanze, die in den Boden eingebracht - beispielsweise manuell oder mechanisch eingedrückt - eine Suspension in den Boden injiziert, wobei die Injektion dabei durch hydrostatischen Druck oder per zusätzlichen Druck mit einem Kompressor in den Boden erfolgen kann. Das Injektionsgut verteilt sich dabei über die Lanzenöffnungen in den Porenraum des Untergrunds. Je nach Druck auf die Suspension wird ein kleinerer oder größerer Radius im Porenraum um die Lanze mit der Suspension versetzt. Die Lanze wird wiederholend punktförmig von der Erdoberfläche angesetzt und entlang der definierten Injektionslinie bzw. -fläche bewegt. Die Injektionspunkte liegen im Abstand des möglichen Radius des Injektionsraumes im Untergrund. Die Höhe des Injektionsbereiches ist dabei den Erfordernissen nach frei wählbar. Die Injektion selber kann dabei per Hand, per Gerät oder Fahrzeug erfolgen.

Als Injektionssuspension wird eine Injektionssuspension aus biozementierenden Mikroorganismen und einer Nährlösung genutzt, welche in den Porenraum verpresst werden. Über Zugabe weiterer Nährlösung wird das Bakterienwachstum an den Oberflächen der Körner stimuliert.

Zusätzlich kann die Suspension Gesteinsmehl mit einem hohen Anteil von Quarz für eine hohe thermische Leitfähigkeit beinhalten. Das Gesteinsmehl in der Suspension wird dabei in den Porenraum verpresst und füllt dabei die Poren ganz oder teilweise mit dem Gesteinsmehl und der Suspensionsflüssigkeit aus.

Nach einem Zeitraum werden die Bestandteile des Gesteinsmehls sich in den Kornkontakten ablagern und höher leitfähige Kornbrücken bilden. Verbleibt die Suspension mit dem beinhalteten Gesteinsmehl in dem Porenraum, wird ebenfalls eine höhere Leitfähigkeit durch die Flüssigkeit und deren Quarzbestandteilen erzielt.

Mit einer zusätzlichen Zuführung einer Suspension von Urea und Calzium, kann letztlich zusätzlich eine Karbonatausfällung induziert und ein Anhaften der Karbonatkristalle an der Oberfläche und der Bildung neuer Kornbrücken aus Karbonaten realisiert.

## Patentansprüche

1. Verfahren zur Verbesserung der thermischen Leitfähigkeit von Böden um und/oder im Bereich um eine eingeerdete Hochspannungsleitung und/oder Höchstspannungsleitung, **dadurch gekennzeichnet, dass**
eine Kornkontaktverbesserung und eine Erhöhung der Materialdichte des die eingeerdete Hochspannungsleitung und/oder Höchstspannungsleitung umgebenden Erdreichs durch
- Injektion einer Suspension zur Anregung einer Biozementierung mit zu injizierenden biozementierenden Mikroorganismen und einer Nährlösung in das Erdreich und
- nachfolgende Biozementierung des umgebenden Erdreichs
erfolgt.

2. Verfahren nach Anspruch 1,
**dadurch gekennzeichnet, dass**
die Suspension zur Anregung einer Biozementierung zusätzlich zerkleinerte Feinbestandteile von Felsmineralien und/oder Gesteinsmehl mit einem hohen Anteil von Quarz aufweist.

3. Verfahren nach Anspruch 1 oder 2,
**dadurch gekennzeichnet, dass**
zusätzlich zu der Injektion einer Suspension zur Anregung einer Biozementierung eine Injektion einer Suspension von Urea und Calzium erfolgt.

4. Verfahren nach einem der vorangehenden Ansprüche,
**dadurch gekennzeichnet, dass**
die Injektion punktuell oder flächig oder abschnittsweise flächig oder punktuell erfolgt.

5. Verfahren nach einem der vorangehenden Ansprüche,
**dadurch gekennzeichnet, dass**
die Verbesserung unmittelbar und/oder zeitlich versetzt und/oder mehrfach zeitlich versetzt nach Einbringung der eingeerdeten Leitungen erfolgt.

6. Verfahren nach einem der vorangehenden Ansprüche,
**dadurch gekennzeichnet, dass**
die Injektion in den Bereich des die eingeerdete Hochspannungsleitung und/oder Höchstspannungsleitung umgebenden Erdreichs erfolgt.

## Claims

1. Method for improving the thermal conductivity of soils around and/or in the region of an earthed high-voltage line and/or extra-high-voltage line,
**characterised in that**
an improvement in grain contact and an increase in the material density of the soil surrounding the earthed high-voltage line and/or extra-high-voltage line is effected by
- injection of a suspension for stimulating a bio-cementation with bio-cementing microorganisms and a nutrient solution to be injected into the soil and
- subsequent bio-cementation of the surrounding soil.

2. Method according to claim 1,
**characterised in that**
the suspension additionally comprises pulverised fine constituents of rock minerals and/or rock flour with a high proportion of quartz in order to stimulate bio-cementation.

3. Method according to claim 1 or 2,
**characterised in that**
in addition to the injection of a suspension for stimulating biocementation, an injection of a suspension of urea and calcium is carried out.

4. Method according to any one of the preceding claims,
**characterised in that**
the injection is carried out in a punctual or planar manner or in sections in a planar or punctual manner.

5. Method according to one of the preceding claims,
**characterised in that**
the improvement is performed immediately and/or with a time delay and/or several times with a time delay after insertion of the earthed lines.

6. Method according to one of the preceding claims,
**characterised in that**
the injection is performed in the area of the soil surrounding the buried high-voltage line and/or extra-high-voltage line.

## Revendications

1. Procédé d'amélioration de la conductivité thermique des sols autour et/ou dans la zone entourant une ligne à haute tension et/ou une ligne à très haute tension enterrée,
**caractérisé en ce que**
une amélioration du contact avec les grains et une augmentation de la densité du matériau du sol entourant la ligne à haute tension et/ou la ligne à très haute tension mise à la terre par
- l'injection dans le sol d'une suspension pour stimuler la biocémentation avec des micro-organismes de biocémentation à injecter et une solution nutritive, et
- biocémentation ultérieure du sol environnant
est effectuée.

2. Procédé selon la revendication 1,
**caractérisé en ce que**
la suspension contient en outre, pour stimuler la bio-cimentation, des composants fins broyés de minéraux rocheux et/ou de la poudre de roche avec une forte proportion de quartz.

3. Procédé selon la revendication 1 ou 2,
**caractérisé en ce que**
en plus de l'injection d'une suspension pour stimuler une bio-cimentation, on procède à l'injection d'une suspension d'urée et de calcium.

4. Procédé selon l'une des revendications précédentes,
**caractérisé en ce que**
l'injection est effectuée de manière ponctuelle ou sur une surface ou sur une partie de la surface ou de manière ponctuelle.

5. Procédé selon l'une des revendications précédentes,
**caractérisé en ce que**
l'amélioration est effectuée immédiatement et/ou de manière décalée dans le temps et/ou de manière décalée plusieurs fois dans le temps après l'insertion des conduites mises à la terre.

6. Procédé selon l'une des revendications précédentes,
**caractérisé en ce que**
l'injection est effectuée dans la zone du sol entourant la ligne à haute tension et/ou la ligne à très haute tension mise à la terre.
